# EUROPÄISCHE PATENTSCHRIFT

(11) **EP 2 757 005 B1**
(45) Veröffentlichungstag und Bekanntmachung des Hinweises auf die Patenterteilung: **04.03.2020**
(21) Anmeldenummer: 14150960.4
(22) Anmeldetag: 13.01.2014
(51) Int. Cl.: B60T 7/12, B60W 30/18

(54) **Verfahren zum Halten eines Kraftfahrzeuges an einer Steigung**
Method for hill holding a motor vehicle
Procédé de retenue d'un véhicule automobile sur une pente

(30) Priorität: 21.01.2013 DE 102013000838
(43) Veröffentlichungstag der Anmeldung: 23.07.2014
(73) Patentinhaber: Magna PT B.V. & Co. KG, 74199 Untergruppenbach (DE)
(72) Erfinder: Hoffmeister, Thomas, 70825 Korntal-Münchingen (DE); Matusche, Ingo, 74199 Untergruppenbach (DE)
(74) Vertreter: Rausch, Gabriele

(56) Entgegenhaltungen:
- EP-A1- 2 511 147
- DE-A1-102011 003 080

## Beschreibung

Die vorliegende Erfindung betrifft ein Verfahren zum temporären Halten eines Kraftfahrzeuges an einer Steigung, wobei das Kraftfahrzeug einen Antriebsstrang mit einem Doppelkupplungsgetriebe aufweist, insbesondere einen Antriebsstrang mit einem Verbrennungsmotor, einer ersten mit dem Verbrennungsmotor verbundenen Kupplung, einer zweiten mit dem Verbrennungsmotor verbundenen Kupplung, einem mit der ersten Kupplung verbundenes und wenigstens zwei Gangstufen aufweisendes erstes Teilgetriebe, einem mit der zweiten Kupplung verbundenes und wenigstens zwei Gangstufen aufweisendes zweites Teilgetriebe, einer mit den Teilgetrieben verbundenen Antriebsachse und einer Steuereinrichtung.

Die vorliegenden Antriebsstränge sind insbesondere automatisierte Antriebsstränge, bei denen die Getriebe bzw. Kupplungen automatisiert mittels geeigneter Aktuatoren betätigt werden können. Die angesprochenen Kupplungen sind insbesondere Reibkupplungen, die vorzugsweise entweder geöffnet sein können, geschlossen sein können, um ein maximales Moment zu übertragen, aber auch schlupfend betätigt werden können, so dass, gesteuert durch die Steuereinrichtung, ein von der Kupplung übertragbares Moment eingestellt werden kann.

Auf dem Gebiet der automatisierten Antriebsstränge sind seit längerem sog. Wandler-Automatikgetriebe bekannt. Diese weisen einen Drehmomentwandler zwischen Verbrennungsmotor und Getriebe auf. Bei eingelegter Anfahrgangstufe ist der Drehmomentwandler dabei so eingestellt, dass das Fahrzeug auch dann mit einer geringen Geschwindigkeit angetrieben wird, wenn ein Gaspedal nicht betätigt wird. Dies hat auch den Vorteil, dass das Fahrzeug an Steigungen, insbesondere an ansteigenden Steigungen, gehalten wird, also insbesondere nicht zurückrollt. Dies gilt jedenfalls für Steigungswinkel, die kleiner sind als ein bestimmter Steigungsschwellenwert.

Bei Kraftfahrzeugen der gattungsgemäßen Art sind die zwischen Verbrennungsmotor und Getriebe angeordneten Kupplungen generell Reibkupplungen, die dann, wenn sie nicht betätigt werden, vorzugsweise geöffnet sind. Dies hat generell den Nachteil, dass ein Fahrzeug an einer Steigung dann, wenn die Kupplung nicht betätigt wird, zurückrollen würde. Daher ist es bekannt, in derartigen Antriebssträngen eine Funktion zum temporären Halten des Kraftfahrzeuges an einer Steigung zu integrieren. Hierbei ist es bekannt, ein Bremssystem des Fahrzeugs, das auf die Räder des Kraftfahrzeuges wirkt, automatisiert zu betätigen, ohne dass der Fahrer hierzu ein Bremspedal betätigen muss. Dieses Verfahren zum temporären Halten des Kraftfahrzeuges an einer Steigung (auch "Hillhold-Funktion" genannt) hat jedoch den Nachteil, dass das Kraftfahrzeug über ein geeignetes Bremssystem verfügen muss bzw. eine aufwendige (sichere) Kommunikation zwischen einem Getriebesteuersystem und einem Bremssteuersystem eingerichtet werden muss.

Alternativ ist es auch bekannt, in gattungsgemäßen Antriebssträngen eine Hillhold-Funktion dadurch einzurichten, dass die Kupplung schlupfend betätigt wird, so dass diese ein Moment überträgt, das hinreichend ist, um das Fahrzeug an der Steigung zu halten. Hierbei entsteht aufgrund des Schlupfes eine hohe Reibungswärme, so dass die Hillhold-Funktion in diesem Fall nur für begrenzte Zeit ausgeführt werden kann oder aber sehr belastend für die jeweilige Kupplung ist.

Aus dem Dokument US 7,166,060 B2 ist ein Antriebsstrang mit einem Doppelkupplungsgetriebe bekannt, bei dem eine Funktion zum Halten eines Fahrzeugs an einer Steigung erreicht werden kann, indem automatisch zwischen einem Haltedrehmoment einer Kupplung und des Bremssystems umgeschaltet wird. Alternativ hierzu kann eine Haltefunktion eingerichtet werden, indem eine Empfindlichkeit einer Gaspedalposition erhöht wird und die Kupplung zwischen vollständig eingerücktem und vollständig ausgerücktem Zustand hin und her geschaltet wird, und zwar auf der Grundlage von Änderungen in der Pedalposition.

Aus dem Dokument US 6,616,572 B2 ist ein Antriebsstrang mit einer einzelnen Anfahrkupplung bekannt, wobei ermittelt wird, ob das Fahrzeug an einer Steigung fährt, wobei eine Gangstufe des automatischen Getriebes des Antriebsstranges erfasst wird und wobei Steuermittel eine Bypass-Kupplung zwischen Eingangswelle und Ausgangswelle einrücken, wenn das Fahrzeug stillsteht und eine Anfahrgangstufe eingelegt ist.

Ferner ist es auf dem Gebiet der Kraftfahrzeugtechnik bekannt, eine elektrische Maschine als zweite Antriebsmaschine in den Antriebsstrang zu integrieren. Derartige Antriebsstränge werden auch als Hybrid-Antriebsstränge bezeichnet.

Aus dem Dokument EP 2 511 1457 A1 ist ein Verfahren zum Betreiben eines Hybrid-Antriebsstranges bekannt. Hier ist offenbart, dass zum Starten des Verbrennungsmotors während des Stillstands oder einer Kriechfahrt des Kraftfahrzeugs mit eingelegter Gangstufe folgende Schritte durchgeführt werden: Auslegen der Gangstufe und Schließen der Reibkupplung sowie Beschleunigen des Verbrennungsmotors auf eine Zünddrehzahl und Starten des Verbrennungsmotors. Aus dem Dokument ist auch bekannt, dass in einem Vorbereitungsschritt aufgrund der Kompression in den Zylindern des Verbrennungsmotors beim Anschleppen des Verbrennungsmotors zunächst ein sogenanntes Losbrechmoment zu überwinden ist. Auch ist dort offenbart, dass ein Anfahren rein elektrisch erfolgen kann. Wenn das Fahrzeug an einer Steigung steht, kann ein Moment einer Kupplung auf ein Haltemoment eingestellt sein, damit das Fahrzeug an der Steigung gehalten wird, ohne eine Parkbremse oder dergleichen betätigen zu müssen. Auch ein Regeln des Momentes der elektrischen Maschine ist dabei angedacht, um das Fahrzeug an einer Steigung zu halten.

Vor diesem Hintergrund ist es eine Aufgabe der Erfindung, ein verbessertes Verfahren zum temporären Halten eines Kraftfahrzeuges an einer Steigung anzugeben.

Gemäß der vorliegenden Erfindung wird die obige Aufgabe gelöst durch ein Verfahren zum temporären Halten eines Kraftfahrzeuges an einer Steigung nach Anspruch 1, wobei das Kraftfahrzeug einen Antriebsstrang aufweist, der einen Verbrennungsmotor, eine erste mit dem Verbrennungsmotor verbundene Kupplung, eine zweite mit dem Verbrennungsmotor verbundene Kupplung, ein mit der ersten Kupplung verbundenes und wenigstens zwei Gangstufen aufweisendes erstes Teilgetriebe, ein mit der zweiten Kupplung verbundenes und wenigstens zwei Gangstufen aufweisendes zweites Teilgetriebe, eine mit den Teilgetrieben verbundene Antriebsachse und eine Steuereinrichtung aufweist, mit den Schritten, einen Haltewunsch in der Steuereinrichtung zu erfassen, eine Haltegangstufe in wenigstens einem der Teilgetriebe einzulegen, wobei eine elektrische Maschine an einen Eingang eines Teilgetriebes angeschlossen oder anschließbar ist, und mit dem weiteren Schritt, die elektrische Maschine so anzusteuern, dass die elektrische Maschine ein das Halten des Kraftfahrzeugs an der Steigung unterstützendes Haltemoment bereitstellt.

Das Verfahren ist gerichtet auf ein Kraftfahrzeug, das mit einem Doppelkupplungsgetriebe ausgestattet ist.

Eine elektrische Maschine ist an einen Eingang des einen Teilgetriebes angeschlossen. Ferner beinhaltet das Verfahren, in dem jeweiligen Getriebe eine Haltegangstufe einzulegen. Dieser Schritt ist so zu verstehen, dass aktiv eine Haltegangstufe dann eingelegt wird, wenn die Haltestufe nicht bereits in dem Getriebe eingelegt ist.

Schließlich beinhaltet das Verfahren den Schritt, die elektrische Maschine so anzusteuern, dass ein das Halten des Kraftfahrzeuges an der Steigung unterstützendes Haltemoment bereitgestellt wird.

Es wird dabei ein weiteres unterstützendes Haltemoment dadurch bereitgestellt, dass eine jeweilige Kupplung geschlossen wird, so dass bei ausgeschaltetem Verbrennungsmotor, ein weiteres unterstützendes Haltemoment über den Verbrennungsmotor bereitgestellt wird.

Durch die Maßnahme, eine in dem Antriebsstrang integrierte elektrische Maschine dazu zu nutzen, ein Haltemoment bereitzustellen, dass das Halten des Kraftfahrzeuges an der Steigung unterstützt, kann entweder eine Kupplung entlastet werden oder aber eine aufwendige Steuerung entfallen.

Bei dem Kraftfahrzeug, das ein Doppelkupplungsgetriebe beinhaltet, kann die elektrische Maschine fest an den Eingang eines Teilgetriebes angebunden sein, kann jedoch auch über eine weitere Kupplung an den Eingang des Teilgetriebes angebunden sein. Der Begriff des Anbindens an den Eingang des Teilgetriebes beinhaltet vorliegend sämtliche Varianten der Anbindung der elektrischen Maschine, die in Leistungsflussrichtung hinter der dem jeweiligen Teilgetriebe zugeordneten Kupplung liegt. Beispielsweise kann die elektrische Maschine hierbei an einen Gangradsatz des Getriebes bzw. des jeweiligen Teilgetriebes angebunden sein.

Die erfindungsgemäßen Verfahren lassen sich in der Regel vergleichsweise einfach durch geeignete Software in der Steuereinrichtung realisieren, so dass keine weiteren mechanischen Komponenten erforderlich sind.

Mit dem erfindungsgemäßen Verfahren kann das Halten des Kraftfahrzeuges an einer ansteigenden Steigung erfolgen. In manchen Varianten kann auch ein Halten des Kraftfahrzeuges an einer abfallenden Steigung erfolgen. Durch die erfindungsgemäßen Verfahren kann der mögliche Winkel der Steigung größer sein als bei Verfahren des Standes der Technik.

Vorzugsweise werden die erfindungsgemäßen Verfahren in der Steuereinrichtung dadurch ausgelöst, dass die Steuereinrichtung zunächst einen bestimmten Steigungswinkel erkennt. Ferner erkennt die Steuereinrichtung vorzugsweise, wenn ein Bremspedal losgelassen wird. Um zu vermeiden, dass das Fahrzeug in diesem Fall zurückrollt, wird die Hillhold-Funktion aktiviert. Die Aktivierung kann dabei zeitlich begrenzt sein. Das Ende der Hillhold-Funktion kann im Fahrzeug vorzugsweise durch geeignete Signalgebung (optisch oder akustisch) angekündigt werden. Das Ende der Hillhold-Funktion kann auch als Funktion einer Maximalbelastung der jeweiligen Komponenten (Wärmeentwicklung in Kupplung und/oder Wärmeentwicklung in Leistungselektronik der elektrischen Maschine etc.) erfolgen.

Vorliegend bezieht sich das erfindungsgemäße Verfahren in erster Linie darauf, dass ein Fahrzeug gehalten wird, insbesondere für den Fall, dass das Fahrzeug an einer Steigung stillstehen soll. In manchen der vorliegend beschriebenen Verfahren ist es zudem möglich, aus diesem Haltezustand direkt in den Zustand des Anfahrens überzugehen. In manchen Varianten ist bevorzugt, wenn die Haltefunktion nur für eine begrenzte Zeit ausgeübt wird, wobei das Fahrzeug anschließend rollen darf. In diesen Varianten ist es ggf. auch möglich, das Bremssystem mit einzubeziehen, um ein Wegrollen des Fahrzeugs zu verhindern. In anderen Varianten kann ein solches Rollen funktionsgemäß hingenommen werden.

Gemäß dem erfindungsgemäßen Verfahren ist die Haltegangstufe in dem einen Teilgetriebe enthalten, an deren Eingang die elektrische Maschine angeschlossen ist. Hierdurch ist es möglich, ein Haltemoment der elektrischen Maschine über dieses Teilgetriebe auf die Antriebsachse zu übertragen.

Erfindungsgemäß ist die dem einen Teilgetriebe zugeordnete Kupplung während des Haltens geöffnet. Hierdurch kann ein weiteres unterstützendes Halteelement über das andere Teilgetriebe auf die Antriebsachse übertragen werden.

Demzufolge ist es erfindungsgemäß, wenn hierbei der Verbrennungsmotor ausgeschaltet ist, wobei die dem anderen Teilgetriebe zugeordnete Kupplung geschlossen ist und wobei in dem anderen Teilgetriebe eine weitere Haltegangstufe eingelegt ist, so dass über das andere Teilgetriebe ein dem Losbrechmoment des ausgeschalteten Verbrennungsmotors entsprechendes ergänzendes Haltemoment übertragen wird.

Das Losbrechmoment ist jenes Moment, das bei ausgeschaltetem Verbrennungsmotor (stehendem Verbrennungsmotor) durch die Kompression der Zylinder des Verbrennungsmotors eingerichtet ist.

Bei dieser Variante ist darauf zu achten, dass bei Aufgabe des Bereitstellens eines Haltemomentes durch die elektrische Maschine das Fahrzeug nicht zurückrollt und hierdurch versehentlich der Verbrennungsmotor gestartet wird. Demzufolge kann es bei dieser Variante auch vorteilhaft sein, die dem anderen Teilgetriebe zugeordnete Kupplung generell geschlossen zu halten, in dem angesprochenen Fall jedoch zu öffnen oder nur noch schlupfend zu treiben, und zwar so, dass über die dem anderen Teilgetriebe zugeordnete Kupplung maximal das Losbrechmoment übertragen werden kann. Generell ist es auch möglich, bei diesem Verfahren die dem anderen Teilgetriebe zugeordnete Kupplung generell so schlupfend zu betätigen, dass maximal das Losbrechmoment des ausgeschalteten Verbrennungsmotors übertragen werden kann.

Vorliegend wird häufig der Begriff einer schlupfenden Kupplung verwendet. Ein "Schlupf' ist bei einer Kupplung physikalisch betrachtet nur bei Vorhandensein einer Drehzahldifferenz zwischen zwei Kupplungsgliedern vorhanden, die größer ist als Null. Im Falle des Stillstands besteht jedoch häufig keine Drehzahldifferenz, so dass der Begriff "schlupfend" sich für diesen Fall darauf beziehen soll, dass die Kupplung ein maximales Losbrechmoment übertragen darf. Somit soll sich für diesen Fall eine schlupfende Kupplung darauf beziehen, dass die Kupplung vorzugsweise auf ein bestimmtes Losbrechmoment gezielt eingeregelt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch den Gegenstand der Ansprüche definierten Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges an einer Steigung, wobei das Kraftfahrzeug eine Steuereinrichtung aufweist, die zur Ausübung des Verfahrens gemäß der vorliegenden Erfindung ausgelegt ist;
- Fig. 2: eine schematische Darstellung eines weiteren Antriebsstranges eines Kraftfahrzeuges, das erfindungsgemäß gehalten werden kann;
- Fig. 3: eine Darstellung des Antriebsstranges der Fig. 2, wobei ein Verfahren gemäß einem nicht erfindungsgemäßen Aspekt zum Halten des Kraftfahrzeuges ausgeführt wird;
- Fig. 4: eine Darstellung des Antriebsstranges der Fig. 2, wobei ein Verfahren gemäß einem nicht erfindungsgemäßen Aspekt ausgeführt wird;
- Fig. 5: eine Darstellung des Antriebsstrangs der Fig. 2, wobei ein Verfahren gemäß einem nicht erfindungsgemäßen Aspekt ausgeführt wird;
- Fig. 6: eine Darstellung des Antriebsstrangs der Fig. 2, wobei ein Verfahren gemäß einem nicht erfindungsgemäßen Aspekt ausgeführt wird;
- Fig. 7: eine Darstellung des Antriebsstrangs der Fig. 2, wobei ein Verfahren gemäß einem nicht erfindungsgemäßen Aspekt ausgeführt wird;
- Fig. 8: eine Darstellung des Antriebsstrangs der Fig. 2, wobei ein Verfahren gemäß einem nicht erfindungsgemäßen Aspekt ausgeführt wird;
- Fig. 9: eine Darstellung des Antriebsstrangs der Fig. 2, wobei ein Verfahren gemäß vorliegenden Erfindung ausgeführt wird;
- Fig. 10: eine Darstellung des Antriebsstrangs der Fig. 2, wobei ein Verfahren gemäß einem nicht erfindungsgemäßen Aspekt ausgeführt wird; und
- Fig. 11: eine Darstellung des Antriebsstrangs der Fig. 2, wobei ein Verfahren gemäß einem nicht erfindungsgemäßen Aspekt ausgeführt wird.

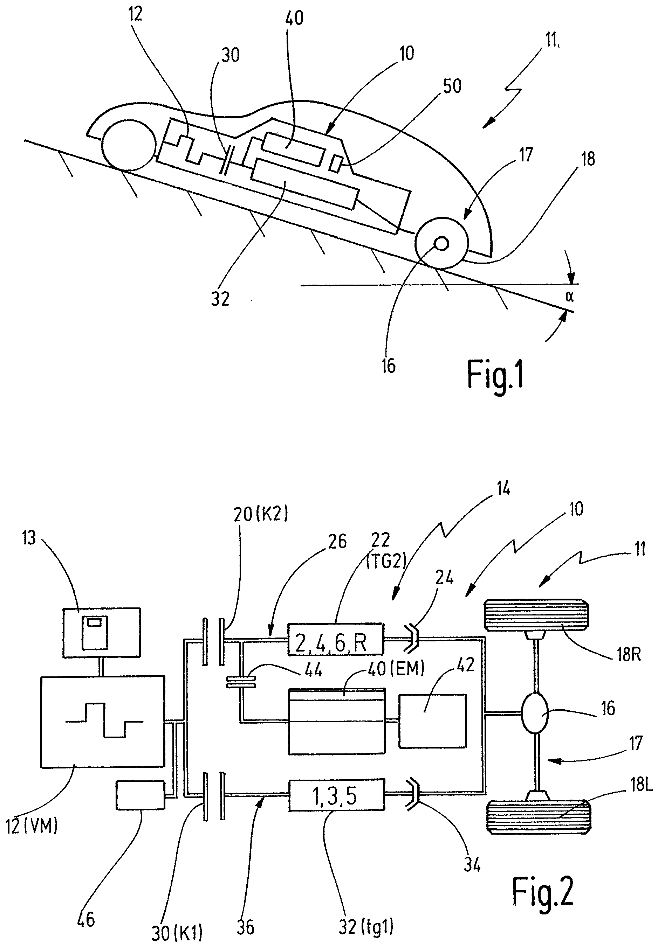

In Fig. 1 ist ein Antriebsstrang für ein Kraftfahrzeug 11 generell mit 10 bezeichnet. Das Kraftfahrzeug 11 kann beispielsweise ein Personenkraftwagen sein. Das Kraftfahrzeug 11 ist vorliegend an einer Steigung gehalten, die unter einem Winkel α zur Horizontalen ausgerichtet ist, wobei α ungleich 0° ist.

Der Antriebsstrang 10 beinhaltet einen Antriebsmotor 12, beispielsweise in Form eines Verbrennungsmotors, der aus einem Energiespeicher wie einem Kraftstofftank versorgt wird. Ferner beinhaltet der Antriebsstrang 10 eine Reibkupplung, deren Eingangsglied mit dem Verbrennungsmotor 12 verbunden ist und deren Ausgangsglied mit dem Eingang eines Getriebes 32 verbunden ist. Das Getriebe 32 kann beispielsweise ein Vorgelegegetriebe mit mehreren Gangstufen sein, insbesondere fünf, sechs, sieben, acht oder mehr Vorwärtsgangstufen sowie ggf. einer Rückwärtsgangstufe. Ein Ausgang des Getriebes 32 ist mit einem schematisch angedeuteten Differential 16 einer Antriebsachse 17 verbunden, wobei das Differential 16 dazu dient, Antriebsleistung auf angetriebene Räder 18 der Antriebsachse 17 zu verteilen. Der Antriebsstrang 10 beinhaltet ferner eine elektrische Maschine 40 sowie eine Steuereinrichtung 50.

Die Kupplung 30, das Getriebe 32 und die elektrische Maschine 40 werden mittels der Steuereinrichtung 50 automatisiert betätigt. Sofern das Kraftfahrzeug aus dem Stillstand an der Steigung angefahren werden soll, muss der Benutzer ein Bremspedal lösen. Um zu vermeiden, dass das Kraftfahrzeug in diesem Fall wegrollt, wird ein Verfahren zum temporären Halten des Kraftfahrzeuges an der Steigung angewendet. Die Erfassung des Lösens des Bremspedals und damit das Erfassen eines Haltewunsches erfolgen in der Steuereinrichtung. Sofern nicht bereits geschehen, wird in dem Getriebe 32 eine Haltegangstufe eingelegt, beispielsweise die niedrigste Vorwärtsgangstufe. Anschließend wird die elektrische Maschine 40 so angesteuert, dass diese für das Halten des Kraftfahrzeuges an der Steigung ein unterstützendes Haltemoment bereitstellt.

Zusätzlich hierzu kann ein ergänzendes Haltemoment bereitgestellt werden, sofern der Verbrennungsmotor 12 eingeschaltet oder ausgeschaltet ist, wobei die Kupplung 30 in diesem Fall vorzugsweise schlupfend betrieben wird. Schließlich ist es auch möglich, über einen automatisierten Eingriff des Bremssystems die Bremsen zu betätigen, auch ohne dass das Bremspedal in dem Kraftfahrzeug 11 betätigt wird.

In Fig. 2 ist eine weitere Ausführungsform eines Antriebsstranges für ein Kraftfahrzeug 11 generell mit 10 bezeichnet. Der Antriebsstrang 12 beinhaltet einen Antriebsmotor, beispielsweise in Form eines Verbrennungsmotors, der aus einem Energiespeicher wie einem Kraftstofftank 13 versorgt wird. Ferner beinhaltet der Antriebsstrang 10 ein Doppelkupplungsgetriebe (DKG) 14, dessen Abtriebsseite mit einem Differential 16 verbunden ist. Das Differential 16 verteilt Antriebsleistung auf ein linkes und ein rechtes angetriebenes Rad 18L, 18R der Antriebsachse 17.

Das Doppelkupplungsgetriebe 14 beinhaltet eine erste Reibkupplung 30 sowie ein erstes Teilgetriebe 32. Das erste Teilgetriebe 32 beinhaltet beispielsweise die ungeraden Gangstufen 1, 3, 5 etc., die mittels zugeordneter Schaltkupplungen 34 ein- und auslegbar sind. Die erste Reibkupplung 30 und das erste Teilgetriebe 32 bilden einen ersten Leistungsübertragungspfad 36 zur Übertragung von Antriebsleistung von dem Antriebsmotor 12 hin zu dem Differential 16.

Das Doppelkupplungsgetriebe 14 beinhaltet ferner eine zweite Reibkupplung 20 sowie ein zweites Teilgetriebe 22. Das zweite Teilgetriebe 22 beinhaltet beispielsweise gerade Gangstufen 2, 4, 6, die mittels schematisch angedeuteter Schaltkupplungen 24 ein- und auslegbar sind. Die zweite Reibkupplung 20 und das zweite Teilgetriebe 22 bilden einen zweiten Leistungsübertragungspfad 26 zur Übertragung von Leistung von dem Antriebsmotor 12 zu dem Differential 16.

Ferner beinhaltet der Antriebsstrang 10 der Fig. 2 eine elektrische Maschine 40, die mit einer Anordnung 42 zur Ansteuerung und Energieversorgung verbunden ist. Die Anordnung 42 kann beispielsweise eine Leistungselektronik sowie eine Batterie beinhalten.

Die elektrische Maschine 40 ist an einen Eingang des zweiten Teilgetriebes 22 fest angebunden, beispielsweise mittels eines Stirnradsatzes oder dgl. Alternativ hierzu kann die elektrische Maschine 40 auch mittels einer Kuppelanordnung 44 (beispielsweise in Form einer Schaltkupplung) an den Eingang des zweiten Teilgetriebes 22 angebunden sein.

In einer alternativen, nicht dargestellten Variante kann die elektrische Maschine 40 auch alternativ an den Eingang des ersten Teilgetriebes 32 angebunden werden, wozu eine geeignete Kuppeleinrichtung vorgesehen werden kann.

Die Anbindung der elektrischen Maschine 40 an jenes Teilgetriebe, das die höchste Gangstufe und die Rückwärtsgangstufe aufweist, ermöglicht ein elektrisches Fahren in nahezu allen Betriebssituationen, wie nachstehend noch ergänzend erläutert werden wird.

Der Antriebsstrang ist dazu ausgelegt, in drei unterschiedlichen Betriebsarten zu arbeiten. In einem konventionellen Antriebsmodus wird Antriebsleistung nur von dem Antriebsmotor 12 erzeugt. Gangwechsel erfolgen auf zugkraftunterbrechungsfreie Art und Weise, indem Antriebsleistung über einen der Leistungsübertragungspfade 26, 36 geführt wird, wobei in dem Teilgetriebe des anderen Leistungsübertragungspfades eine Gangstufe vorgewählt wird. Anschließend erfolgt ein Gangwechsel durch Übergabe des Leistungsübertragungsflusses von dem einen Pfad auf den anderen Pfad, indem die Reibkupplungen 20, 30 auf überschneidende Art und Weise betätigt werden. Dieser Antriebsmodus ist auf dem Gebiet der Doppelkupplungsgetriebe allgemein bekannt.

Ferner ist ein zweiter hybridischer Antriebsmodus einrichtbar, bei dem Antriebsleistung sowohl von dem Antriebsmotor 12 als auch von der elektrischen Maschine 40 bereitgestellt wird. Hierbei können die Antriebsleistungen im Wesentlichen über den Summenpunkt am Eingang des zweiten Teilgetriebes 22 (bzw. in Leistungsflussrichtung hinter der zweiten Reibkupplung 20) aufaddiert werden. Eine weitere Möglichkeit eines hybridischen Antriebsmodus besteht darin, dass Antriebsleistung von der elektrischen Maschine über das eine Teilgetriebe und Antriebsleistung von dem Verbrennungsmotor über das andere Teilgetriebe übertragen werden, wobei ein Summenpunkt dann am Differential liegt.

Schließlich ist ein dritter Antriebsmodus möglich, bei dem nur die elektrische Maschine 40 zur Erzeugung von Antriebsleistung angesteuert wird, wohingegen der Antriebsmotor 12 ausgeschaltet ist bzw. stillgelegt ist. Da die elektrische Maschine 40 auf der Sekundärseite der zweiten Reibkupplung 20 angebunden ist, können in diesem Betriebsmodus die herkömmlichen Schaltabläufe eines Doppelkupplungsgetriebes nicht angewendet werden. Im rein elektrischen Vorwärtsfahrbetrieb können jedoch Gangwechsel zwischen den Vorwärtsgangstufen 2, 4, 6 erfolgen.

Bei 46 ist ein optional vorgesehener Starter/Generator vorgesehen, der zum Starten des Verbrennungsmotors 12 verwendbar ist. In der Regel ist es jedoch möglich, den Verbrennungsmotor 12 durch Schließen der ersten Reibkupplung 20 und durch Öffnen der Schaltkupplungen 24 mittels der elektrischen Maschine 40 zu starten.

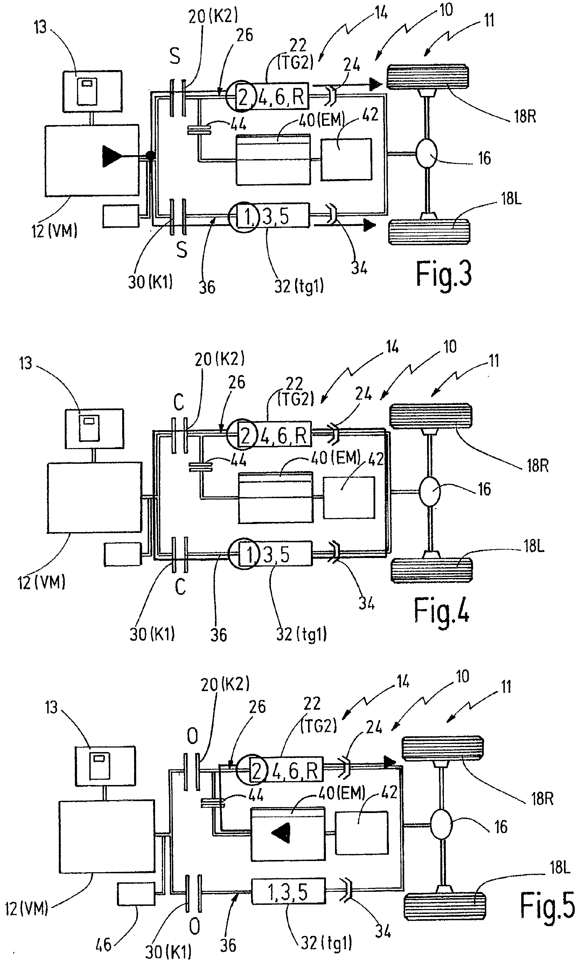

Auch bei dem Antriebsstrang der Fig. 2 ist es möglich, Verfahren zum temporären Halten des Kraftfahrzeuges 11 an der Steigung mit dem Winkel α vorzusehen, von denen einige Varianten bzw. Ausführungsformen in den folgenden Fig. 3 bis 11 gezeigt sind, auf die nachfolgend eingegangen wird.

Eine erste Ausführungsform eines derartigen Verfahrens wird anhand Fig. 3 erläutert. Hierbei wird die temporäre Haltefunktion an der Steigung ("Hillhold-Funktion") dadurch ermöglicht, dass mit zwei eingelegten Haltegangstufen 1, 2 in den Teilgetrieben 22, 32 und schlupfend (S in Fig. 3) betätigten Kupplungen 20, 30 das Moment des Verbrennungsmotors 12 genutzt wird, um das Fahrzeug 11 zu halten. Hierdurch wird die Wärmeentwicklung auf beide Kupplungen 20, 30 aufgeteilt. Die elektrische Maschine 40 ist hierbei mechanisch oder elektrisch abgekoppelt und wirkt nicht auf den Abtrieb. Daher ist dieses Verfahren auch bei Doppelkupplungsgetrieben anwendbar, die keine elektrische Maschine 40 aufweisen.

In Fig. 4 ist eine weitere Variante gezeigt, die auch ohne elektrische Maschine realisierbar ist. Hierbei wird die Hillhold-Funktion dadurch ermöglicht, dass mit zwei eingelegten Gangstufen 1, 2 in den Teilgetrieben 22, 32 und zwei geschlossenen (C in Fig. 4) Kupplungen 20, 30 das Doppelkupplungsgetriebe 14 insgesamt verspannt und damit blockiert wird, so dass sehr hohe Haltemomente in der Hillhold-Funktion ermöglicht sind. Die elektrische Maschine 40 liefert hierbei kein Haltemoment, kann dieses jedoch bereitstellen, sobald ein Anfahren gewünscht ist. Der Verbrennungsmotor ist bei dieser Variante stillgelegt bzw. ausgeschaltet.

In den folgenden Fig. 5 bis 11 sind weitere Verfahren zum temporären Halten eines Kraftfahrzeuges 11 an einer Steigung mit einem Winkel α größer 0 gezeigt, bei denen jeweils die elektrische Maschine 40 des Antriebsstranges so angesteuert wird, dass diese ein unterstützendes Haltemoment bereitstellt.

In einer ersten Variante gemäß Fig. 5 wird die Hillhold-Funktion dadurch ermöglicht, dass in dem zweiten Teilgetriebe 22 eine Haltegangstufe eingelegt wird, insbesondere eine niedrige Gangstufe, hier die Gangstufe 2. Ferner werden die Reibkupplungen 20, 30 geöffnet (O in Fig. 5). Der Verbrennungsmotor kann abgeschaltet sein, wirkt jedenfalls vorliegend nicht auf den Abtrieb. Das zum Halten des Kraftfahrzeuges an der Steigung notwendige Haltemoment wird alleine von der elektrischen Maschine 40 aufgebracht. Ein Anfahren kann entweder über die elektrische Maschine erfolgen. Falls diese bereits stark belastet ist (beispielsweise bei großen Steigungen) kann bei Bedarf der Verbrennungsmotor 12 aus der Hillhold-Funktion heraus gestartet werden, und das Kraftfahrzeug kann über das erste Teilgetriebe 32 angefahren werden. In diesem Fall ist es daher vorteilhaft, wenn der separate Starter/Generator 46 vorgesehen ist.

Je nach Steigung ist es hierbei möglich, dass in der elektrischen Maschine bzw. der zugeordneten Leistungselektronik starke Wärme aufgrund der hohen Ströme entsteht.

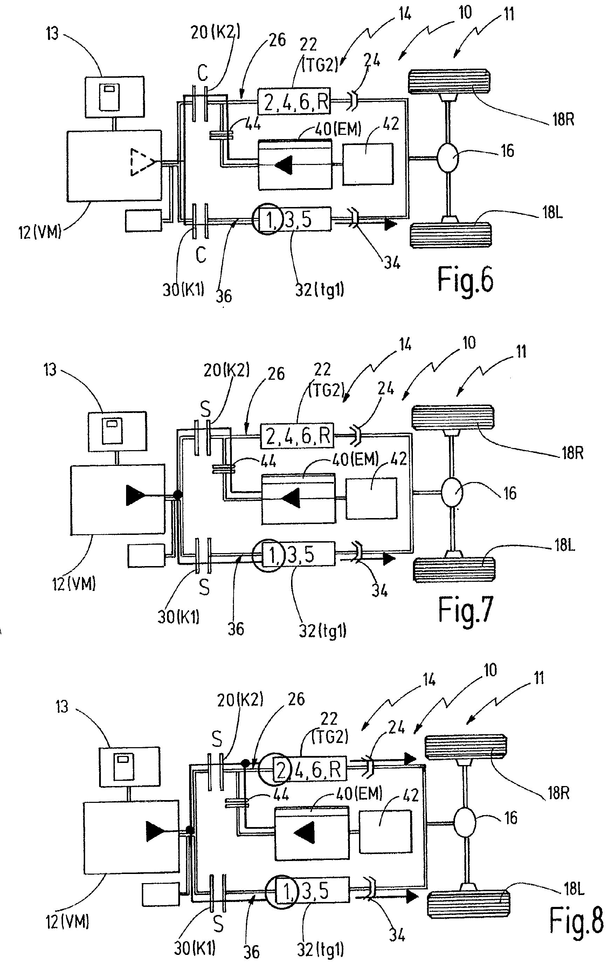

In einer weiteren Variante, die in Fig. 6 gezeigt ist, werden die Schaltkupplungen 24 des zweiten Teilgetriebes 22 geöffnet. Die Kupplungen 20, 30 werden jeweils geschlossen. In dem ersten Teilgetriebe 32 wird eine Haltegangstufe eingelegt (hier die Gangstufe 1). Der Verbrennungsmotor 12 ist ausgeschaltet. Bei dieser Variante ist von Vorteil, dass das Haltemoment über ein besseres Übersetzungsverhältnis auf die Antriebsachse 17 geführt werden kann, so dass die elektrische Maschine 40 weniger belastet wird. Zu dem von der elektrischen Maschine 40 bereitgestellten Haltemoment addiert sich ein Haltemoment des Verbrennungsmotors 12, der in seinem stillgelegten Zustand zusätzlich sein Losbrechmoment zur Verfügung stellt.

Bei einer weiteren Variante, die in Fig. 7 gezeigt ist, werden wiederum in dem zweiten Teilgetriebe 22 sämtliche Schaltkupplungen 24 geöffnet. In dem ersten Teilgetriebe 32 wird eine Haltegangstufe (hier Gangstufe 1) eingelegt. Ein Haltemoment wird von der elektrischen Maschine 40 bereitgestellt, wozu die zweite Reibkupplung 20 geschlossen sein kann oder schlupfend betätigt wird. Die erste Reibkupplung 30 wird ebenfalls schlupfend betätigt, und der Verbrennungsmotor 12 ist eingeschaltet und liefert ebenfalls ein Haltemoment. Hierdurch kann das von der elektrischen Maschine 40 bereitgestellte Moment weiter reduziert werden, so dass deren Leistungselektronik geringer belastet wird (Komponentenschutz).

In einer weiteren Variante, die in Fig. 8 gezeigt ist, wird die Hillhold-Funktion dadurch ermöglicht, dass in beiden Teilgetrieben 22, 32 jeweils eine Haltegangstufe eingelegt wird. Ferner werden beide Reibkupplungen 20, 30 schlupfend betätigt. Die elektrische Maschine kann dabei Haltemoment sowohl über das zweite Teilgetriebe 22 als auch ggf. über die zweite Reibkupplung 20 bereitstellen. Der Verbrennungsmotor stellt Haltemoment über die schlupfend betätigte erste Reibkupplung 30 und das erste Teilgetriebe 32 bereit. In diesem Fall kann die zweite Reibkupplung 20 auch geöffnet werden, so dass der Verbrennungsmotor 12 über den Leistungsübertragungspfad 36 Haltemoment bereitstellt, und die elektrische Maschine 40 über den Leistungsübertragungspfad 26.

Eine derartige Variante ist vergleichsweise einfach realisierbar. Da der Verbrennungsmotor 12 bereits eingeschaltet ist, kann bei Bedarf über die erste Reibkupplung 30 angefahren werden.

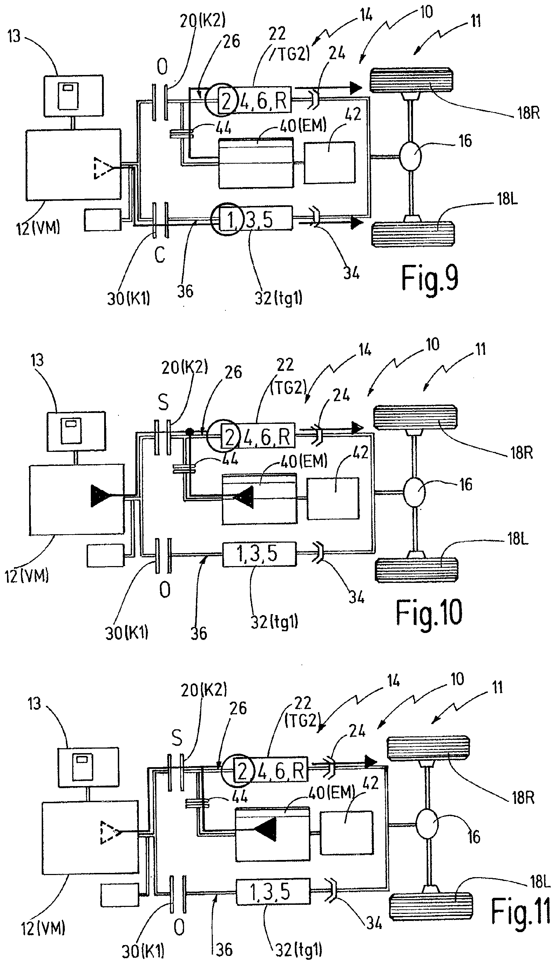

Bei einer erfindungsgemäßen Variante, die in Fig. 9 gezeigt ist, wird die Hillhold-Funktion dadurch ermöglicht, dass in beiden Teilgetrieben eine Haltegangstufe eingelegt wird. Die zweite Reibkupplung 20 wird geöffnet (O). Die erste Reibkupplung 30 wird geschlossen. In diesem Fall wird von der elektrischen Maschine 40 ein Haltemoment über das zweite Teilgetriebe 22 bereitgestellt. Ein ergänzendes Haltemoment wird über den in diesem Fall stillgelegten bzw. ausgeschalteten Verbrennungsmotor 12 bereitgestellt, und zwar dadurch, dass dieser ein Losbrechmoment bereitstellt, das kleiner ist als das Moment, das zum Starten des Verbrennungsmotors erforderlich ist. Auch bei dieser Variante kann die elektrische Maschine entlastet werden.

Bei dieser Ausführungsform kann die erste Reibkupplung 30 geschlossen sein, kann jedoch auch schlupfend betätigt werden. Letzterer Fall ist bevorzugt, da hierdurch vermieden werden kann, dass ein zu großes Moment von der Antriebsachse auf den Verbrennungsmotor 12 übertragen wird, wodurch dessen Losbrechmoment überschritten werden könnte.

Eine weitere Variante ist in Fig. 10 gezeigt, wobei eine Hillhold-Funktion dadurch ermöglicht wird, dass in dem ersten Teilgetriebe 32 keine Gangstufe eingelegt wird und die erste Reibkupplung 30 geöffnet wird. In dem zweiten Teilgetriebe 22 wird die Haltegangstufe 2 eingelegt, und die zweite Reibkupplung 20 wird schlupfend betätigt. Der Verbrennungsmotor 12 ist eingeschaltet. Das Haltemoment wird zum einen von der elektrischen Maschine 40 bereitgestellt, wobei am Eingang des zweiten Teilgetriebes 22 ein ergänzendes Haltemoment von dem Verbrennungsmotor 12 über die schlupfende zweite Reibkupplung 20 bereitgestellt wird.

In Fig. 11 ist eine weitere Variante einer Hillhold-Funktion gezeigt, bei der wiederum in dem ersten Teilgetriebe 32 keine Gangstufe eingelegt ist und/oder die erste Reibkupplung 30 geöffnet ist. Der Verbrennungsmotor 12 ist ausgeschaltet. In diesem Fall wird ein ergänzendes Haltemoment von dem Verbrennungsmotor 12 über dessen Losbrechmoment bereitgestellt, wobei die zweite Reibkupplung 20 in diesem Fall ebenfalls vorzugsweise schlupfend betätigt wird, wobei das ergänzende Haltemoment des Verbrennungsmotors 12 zu dem Haltemoment der elektrischen Maschine 40 aufaddiert wird und über die in dem zweiten Teilgetriebe 22 eingelegte Haltegangstufe 2 auf die Antriebsachse übertragen wird. In dieser Variante kann der Verbrennungsmotor 12 bei Bedarf gestartet werden, und das Kraftfahrzeug 11 kann über die erste Reibkupplung 30 und das erste Teilgetriebe 32 anfahren, wozu es vorteilhaft sein kann, in dem ersten Teilgetriebe 32 die Anfahrgangstufe (1) vorab anzuwählen.

Zumindest bei den obigen Varianten, bei denen der Verbrennungsmotor ausgeschaltet ist, kann die Haltefunktion nicht nur an einer positiven, ansteigenden Steigung realisiert werden, sondern auch an einer abfallenden Steigung. In diesem Fall kann es notwendig sein, das von der elektrischen Maschine 40 bereitgestellte Moment vom Vorzeichen her zu verdrehen.

Insgesamt kann je nach Ausführungsform bei den obigen Varianten ein erhöhter Komfort, eine höhere Dynamik, eine effizientere Energieausnutzung durch Nutzung von ggf. zwei Haltemomentquellen realisiert werden. Ferner kann ggf. ein höheres Haltemoment erreicht werden. Der Verschleiß der Kupplungen verringert sich. Das Bremssystem wird entlastet. Die Hochvoltbatterie und/oder die Leistungselektronik werden weniger belastet. Zudem kann ein dynamischeres Anfahren ohne Lösen von Bremsen erfolgen.

## Patentansprüche

1. Verfahren zum temporären Halten eine Kraftfahrzeuges (11) an einer Steigung (a), wobei das Kraftfahrzeug (11) einen Antriebsstrang (10) aufweist, der einen Verbrennungsmotor (12), eine erste mit dem Verbrennungsmotor (12) verbundene Kupplung (30), eine zweite mit dem Verbrennungsmotor (12) verbundene Kupplung (20), ein mit der ersten Kupplung (30) verbundenes und wenigstens zwei Gangstufen aufweisendes erstes Teilgetriebe (32), ein mit der zweiten Kupplung (20) verbundenes und wenigstens zwei Gangstufen aufweisendes zweites Teilgetriebe (22), eine mit den Teilgetrieben (22, 23) verbundene Antriebsachse (17), eine elektrische Maschine (40), die an einen Eingang eines Teilgetriebes (22) angeschlossen ist, und eine Steuereinrichtung (50) aufweist, mit den Schritten:
- Erfassen eines Haltewunsches in der Steuereinrichtung (50);
- Einlegen einer Haltegangstufe 1 (2) in wenigstens einem der Teilgetriebe (22), an dessen Eingang die elektrische Maschine (40) angeschlossen ist;
- Ansteuern der elektrischen Maschine (40) so, dass die elektrische Maschine (40) ein das Halten des Kraftfahrzeuges (11) an der Steigung unterstützendes Haltemoment bereitstellt, wobei das Haltemoment von der elektrischen Maschine (40) über das eine Teilgetriebe (22) auf die Antriebsachse (17) übertragen wird;
wobei die dem einen Teilgetriebe (22) zugeordnete Kupplung (20) während des Haltens geöffnet ist und wobei
der Verbrennungsmotor (12) ausgeschaltet ist, wobei die dem anderen Teilgetriebe (32) zugeordnete Kupplung (30) geschlossen ist und wobei in dem anderen Teilgetriebe (32) eine weitere Haltegangstufe (1) eingelegt ist, so dass über das andere Teilgetriebe (32) ein dem Losbrechmoment des ausgeschalteten Verbrennungsmotors (12) entsprechendes ergänzendes Haltemoment übertragen wird.

## Claims

1. Method for temporarily holding a motor vehicle (11) on a hill (a), wherein the motor vehicle (11) has a drive train (10) which has an internal combustion engine (12), a first clutch (30) connected to the internal combustion engine (12), a second clutch (20) connected to the internal combustion engine (12), a first partial transmission (32) connected to the first clutch (30) and having at least two gears, a second partial transmission (22) connected to the second clutch (20) and having at least two gears, a drive shaft (17) connected to the partial transmissions (22, 23), an electric machine (40) which is connected to an input of a partial transmission (22), and a control device (50), comprising the steps:
- detecting a hold request in the control device (50);
- engaging a holding gear 1 (2) in at least one of the partial transmissions (22), to the input of which the electric machine (40) is connected;
- activating the electric machine (40) such that the electric machine (40) provides a holding torque assisting the holding of the motor vehicle (11) on the hill, wherein the holding torque is transmitted from the electric machine (40) to the drive shaft (17) via the one partial transmission (22);
wherein the clutch (20) assigned to the one partial transmission (22) is disengaged during the holding, and wherein
the internal combustion engine (12) is switched off, wherein the clutch (30) assigned to the other partial transmission (32) is engaged and wherein a further holding gear (1) is engaged in the other partial transmission (32), so that a supplementary holding torque corresponding to the breakaway torque of the switched-off internal combustion engine (12) is transmitted via the other partial transmission (32).

## Revendications

1. Procédé d'arrêt temporaire d'un véhicule automobile (11) sur une pente (a), le véhicule automobile (11) comportant une chaîne cinématique (10) qui comporte un moteur à combustion interne (12), un premier embrayage (30) relié au moteur à combustion interne (12), un deuxième embrayage (20) relié au moteur à combustion interne (12), une première partie de transmission (32) reliée au premier embrayage (30) et comportant au moins deux rapports de vitesse, une deuxième partie de transmission (22) reliée au deuxième embrayage (20) et comportant au moins deux rapports de vitesse, un essieu d'entraînement (17) relié aux parties de transmissions (22, 23), une machine électrique (40) raccordée à une entrée d'une partie de transmission (22) et un dispositif de commande (50), le procédé comprenant les étapes suivantes :
- détecter une demande d'arrêt dans le dispositif de commande (50) ;
- engager un rapport d'arrêt 1 (2) dans au moins une (22) des parties de transmission à l'entrée de laquelle la machine électrique (40) est raccordée ;
- commander la machine électrique (40) de telle sorte que la machine électrique (40) assure un couple d'arrêt permettant l'arrêt du véhicule automobile (11) sur la pente, le couple d'arrêt étant transmis de la machine électrique (40) à l'essieu d'entraînement (17) par le biais de l'une (22) des parties de transmission ;
l'embrayage (20) associé à l'une (22) des parties de transmission étant ouvert pendant l'arrêt et
le moteur à combustion interne (12) étant coupé, l'embrayage (30) associé à l'autre (32) des parties de transmission étant fermé et un autre étage d'arrêt (1) étant engagé dans l'autre (32) des parties de transmission de telle sorte qu'un couple d'arrêt supplémentaire, qui correspond au couple de détachement du moteur à combustion interne (12) coupé, soit transmis par le biais de l'autre (32) des parties de transmission.
